(19) Europäisches Patentamt
European Patent Office
Office européen des brevets

(11) **EP 2 289 977 B1**

(12) **EUROPÄISCHE PATENTSCHRIFT**

(45) Veröffentlichungstag und Bekanntmachung des Hinweises auf die Patenterteilung:
**01.02.2012 Patentblatt 2012/05**

(21) Anmeldenummer: **10169956.9**

(22) Anmeldetag: **19.07.2010**

(51) Int Cl.:
*C08G 77/46* (2006.01)     *C08L 83/04* (2006.01)
*B01D 19/04* (2006.01)     *C11D 3/00* (2006.01)
*D21H 21/12* (2006.01)

(54) **Entschäumerformulierungen**

Defoamer formulations

Formules d'agents anti-moussants

(84) Benannte Vertragsstaaten:
**AL AT BE BG CH CY CZ DE DK EE ES FI FR GB GR HR HU IE IS IT LI LT LU LV MC MK MT NL NO PL PT RO SE SI SK SM TR**

(30) Priorität: **27.07.2009 DE 102009028041**

(43) Veröffentlichungstag der Anmeldung:
**02.03.2011 Patentblatt 2011/09**

(73) Patentinhaber: **Wacker Chemie AG**
**81737 München (DE)**

(72) Erfinder:
• **Herzig, Christian, Dr.**
**83329, Waging (DE)**
• **Burger, Willibald, Dr.**
**84489, Burghausen (DE)**
• **Joachimbauer, Martina**
**84533, Haiming (DE)**
• **Wimmer, Josef**
**84489, Burghausen (DE)**

(74) Vertreter: **Deffner-Lehner, Maria et al**
**Wacker Chemie AG**
**Zentralbereich Patente, Marken und Lizenzen**
**Hanns-Seidel-Platz 4**
**81737 München (DE)**

(56) Entgegenhaltungen:
EP-A2- 0 777 010     DE-A1-102005 007 313
JP-A- 2004 181 415     US-A- 5 271 868
US-A1- 2003 013 808     US-A1- 2004 122 113

**Beschreibung**

Die Erfindung betrifft Entschäumerformulierungen, enthaltend (A) Antischaummittel auf Basis von Siloxanen und (B) Siliconpolyether, sowie deren Anwendung zum Entschäumen von, insbesondere den bei der Zellstoffherstellung anfallenden, wässrigen Medien.

Entschäumer auf Basis von Siloxanen werden beispielsweise nach DD-A 056 762 durch Erhitzen von hydrophiler Kieselsäure in Polydimethylsiloxanen hergestellt. Dieses Verfahren ist recht aufwendig, trotzdem ist die Wirksamkeit der so hergestellten Entschäumer nicht zufriedenstellend. Die Verteilung von hydrophobierter Kieselsäure in einem Polydimethylsiloxan, z. B. entsprechend DE-A 29 25 722, ist ein rationelleres Verfahren, die Wirksamkeit der erhaltenen Entschäumer aber ebenfalls verbesserungswürdig.

Bekannt ist ebenfalls die Verwendung von modifizierten Polyorganosiloxanen in Entschäumerzubereitungen. So wird z. B. die Verwendung von verzweigten Siloxanentschäumern in Kombination mit Polyether-Polysiloxan-Copolymeren als Entschäumer z.B. für die Zellstoffherstellung empfohlen (EP-A 341 952). Auch in Kombination mit Mineralölen als Trägeröl sollen Polyether-Polysiloxan-Copolymere einen positiven Effekt haben (US 5,523,019). Gemäß WO 98/000216 sollen als Tenside in Entschäumerformulierungen Siloxane mit Dimethyl-3-hydroxypropylpolyoxyethylenpolyoxypropylengruppen besonders geeignet sein.

In EP-A 663 225 und EP-A 1076073 werden vernetzte bzw. verzweigte Polyorganosiloxane, welche mindestens eine Polyethergruppierung tragen, als eine der beiden Komponenten einer Entschäumerformulierung beansprucht. Die Vernetzung erfolgt dabei über Alkylengruppen, über Polydimethylsiloxane oder über Polyethergruppen. Durch die Verknüpfung über Si-C Bindungen sind die Produkte hydrolysestabil.
Allerdings sind diese Produkte im Allgemeinen sehr hochviskos und schlecht handhabbar oder weiter verarbeitbar. Auch ihr Ablagerungsverhalten in den zu entschäumenden Prozessen ist erhöht.

Das in US-A 5,625,024 vorgeschlagene Verfahren führt zu Verknüpfungen über Si-O-C-Gruppen, die insbesondere in sauren oder basischen Medien nicht hydrolysestabil sind und somit im schäumenden wässrigen Medium ihre Wirksamkeit verlieren.

In DE 102 55 649 A werden Entschäumerformulierungen beschrieben, in denen zu bekannten Antischaummitteln speziell verzweigte Polyether-Polysiloxan-Copolymere zugesetzt werden. Derartige Entschäumerformulierungen lassen jedoch in Gegenwart von Wasser in ihrer Wirkung nach.

In DE 31 33 869 C1 (korrespondierende US 4,417,068 A) ist allgemein die Herstellung von Siliconpolyethern aus Hydrogensiloxanen und Alkenylpolyethern in einer edelmetallkatalysierten Hydrosilylierungsreaktion beschrieben. Die Beispiele zeigen den Einfluss von Katalysatormenge und Katalysatorstruktur auf den Umsatz der SiH-Gruppen. Der in einem Zeitintervall erzielbare SiH-Umsatz kann bei feststehendem Katalysatortyp nur durch erheblich höhere Edelmetallkonzentrationen wesentlich erhöht werden, was aber aufwendig und daher nachteilig ist. Es ist außerdem beschrieben, dass zu deren Herstellung jeweils ein Alkenylpolyether und ein Hydrogensiloxan eingesetzt wird. Andere Siliconpolyether benötigen jeweils andere Rohstoffe.

US 5,271,868 beschreibt Antischaummittelzusammensetzungen, die zum überwiegenden Teil aus Siliconpolyethern bestehen. Die Siliconpolyether bestehen aus einem linearen Siloxanrückgrat mit zwei verschiedenen Arten von Polyethersubstituenten und enthalten weiterhin 1 bis 10 Alkylmethylsiloxyeinheiten pro Molekül, wobei die Alkylketten 3 bis 20 C-Atome aufweisen. Die beiden Polyetherarten unterscheiden sich in der Form, dass die eine Polyetherart einen molaren Anteil von 10 - 30 % Ethylenoxyeinheiten enthält, während die andere Polyetherart einen molaren Anteil von 65 - 85 % Ethylenoxyeinheiten aufweist, wobei der Rest jeweils aus Propylenoxyeinheiten besteht. Die verschiedenen Polyethersubstituenten sind damit auch verschieden polar. Siliconpolyether, die neben gemischten Substituenten aus Ethylenoxy- und Propylenoxyeinheiten auch solche bestehend aus nur einer Art von Alkylenoxyeinheiten enthalten, sind nicht beschrieben. Die Siliconpolyether werden nach der üblichen Hydrosilylierungsmethode aus einem H-Siloxan und in diesem Fall zwei verschiedenen ungesättigten Polyethern hergestellt, wobei der Einbau der Alkylketten durch zusätzliche Addition von Olefinen an das H-Siloxan entweder gleichzeitig oder in einem separaten Syntheseschritt erfolgt. Der angegebene eher enge Definitionsbereich dieser Polyether lässt annehmen, dass aufgrund der unterschiedlichen Polarität der Polyether auch ihre gegenseitige Mischbarkeit begrenzt ist, und diese immer schlechter wird, je mehr sie sich voneinander unterscheiden. Dieser Effekt wäre dann für eine chem. Reaktion ungünstig. Der zusätzliche Einbau von Alkylgruppen verkompliziert das Herstellverfahren nochmals, da Olefine eine andere Hydrosilylierungscharakteristik haben als Allylpolyether. Laut der in US 5,271,868 zitierten JP 58-58126 ist dieser Einbau aber notwendig, um die Leistungsfähigkeit von Antischaummitteln weiter zu verbessern.

Es bestand daher die Aufgabe, die oben beschriebenen Nachteile zu überwinden und Siliconpolyether bereitzustellen, mit denen effizientere sowie hydrolysestabile und leicht verarbeitbare Entschäumungsformulierungen erhalten werden. Die Aufgabe wird durch die Erfindung gelöst.

Gegenstand der Erfindung sind Entschäumerformulierungen enthaltend

(A) Mischung aus Kieselsäure und Polyorganosiloxanen als Antischaummittel auf der Basis von Siloxanen und

(B) Siliconpolyether herstellbar indem in einem ersten Schritt

Organopolysiloxanen (1), die einen Gehalt von 0,05 bis 1,6 Gew.-% Si-gebundene Wasserstoffatome aufweisen, mit ungesättigten Polyethern (3) ausgewählt aus der Gruppe der allgemeinen Formeln:

$$CH_2=CR^1-(CH_2)_aO(C_2H_4O)_b \, (C_3H_6O) \, {}_cR^1 \qquad (Ib)$$

$$CH_2=CR^1-(CH_2)_aO(C_3H_6O)_cR^1 \qquad (Ic),$$

umgesetzt werden, wobei

$R^1$ ein Wasserstoffatom oder einen Kohlenwasserstoffrest mit 1 bis 6 Kohlenstoffatomen bedeutet,

a 0 oder eine ganze Zahl von 1 bis 16, vorzugsweise 1 bis 4, ist,

b eine ganze Zahl von 1 bis 50, vorzugsweise 3 bis 20, ist und

c eine ganze Zahl von 1 bis 50, vorzugsweise 3 bis 40 ist, mit der Maßgabe, dass die Summe aus b+c mindestens 10, vorzugsweise mindestens 20, ist und

dass eine Mischung aus zwei verschiedenen Arten von Polyethern der Formeln ((Ib) und (Ic) eingesetzt werden, bei denen der Anteil an Ethylenoxyeinheiten, bezogen auf die Gesamtzahl der eingesetzten Alkylenoxyeinheiten, höchstens 30 Mol-% beträgt,

und gegebenenfalls in einem zweiten Schritt das Reaktionsprodukt aus (1) und (3) weiter umgesetzt wird mit Organopolysiloxanen (2), die einen Gehalt von 0,01 bis 0,5 Gew.-% Si-gebundenen Wasserstoffatome aufweisen,

mit der Maßgabe, dass die Umsetzungen im ersten und zweiten Schritt in Gegenwart von die Anlagerung von Si-gebundenen

Wasserstoff an aliphatische Doppelbindungen fördernde Katalysatoren (4) durchgeführt werden und

dass das Verhältnis der Gewichtskonzentration von Si-gebundenem Wasserstoff in Organopolysiloxan (1) zur Gewichtskonzentration von Si-gebundenem Wasserstoff in Organopolysiloxan (2) mindestens 1,5, bevorzugt mindestens 2,0 beträgt.

Gegenstand der Erfindung sind weiterhin Siliconpolyether (B) herstellbar indem

in einem ersten Schritt

Organopolysiloxanen (1), die einen Gehalt von 0,05 bis 1,6 Gew.-% Si-gebundene Wasserstoffatome aufweisen,

mit ungesättigten Polyethern (3) ausgewählt aus der Gruppe der allgemeinen Formeln:

$$CH_2=CR^1-(CH_2)_aO(C_2H_4O)_b(C_3H_6O)_cR^1 \qquad (Ib)$$

$$CH_2=CR^1-(CH_2)_aO(C_3H_6O)cR^1 \qquad (Ic),$$

umgesetzt werden, wobei

$R^1$ ein Wasserstoffatom oder einen Kohlenwasserstoffrest mit 1 bis 6 Kohlenstoffatomen bedeutet,

a 0 oder eine ganze Zahl von 1 bis 16, vorzugsweise 1 bis 4, ist,

b eine ganze Zahl von 1 bis 50, vorzugsweise 3 bis 20, ist und

c eine ganze Zahl von 1 bis 50, vorzugsweise 3 bis 40 ist,

mit der Maßgabe, dass die Summe aus b+c mindestens 10, vorzugsweise mindestens 20, ist und

dass eine Mischung aus zwei verschiedenen Arten von Polyethern der Formeln (Ib) und (Ic) eingesetzt werden, bei denen der Anteil an Ethylenoxyeinheiten, bezogen auf die Gesamtzahl der eingesetzten Alkylenoxyeinheiten, höchstens 30 Mol-% beträgt, und gegebenenfalls in einem zweiten Schritt

das Reaktionsprodukt aus (1) und (3) weiter umgesetzt wird mit Organopolysiloxanen (2), die einen Gehalt von 0,01 bis 0,5 Gew.-% Si-gebundenen Wasserstoffatome aufweisen,

mit der Maßgabe, dass die Umsetzungen im ersten und zweiten Schritt in Gegenwart von die Anlagerung von Si-gebundenen Wasserstoff an aliphatische Doppelbindungen fördernde Katalysatoren (4) durchgeführt werden und

dass das Verhältnis der Gewichtskonzentration von Si-gebundenem Wasserstoff in Organopolysiloxan (1) zur Gewichtskonzentration von Si-gebundenem Wasserstoff in Organopolysiloxan (2) mindestens 1,5, bevorzugt mindestens 2,0 beträgt.

Vorzugsweise beträgt bei dem erfindungsgemäßen Verfahren das Verhältnis der Gewichtskonzentration von Si-gebundenem Wasserstoff in Organopolysiloxan (1) zur Gewichtskonzentration von Si-gebundenem Wasserstoff in Organopolysiloxan (2) höchstens 20, bevorzugt höchstens 10.

Wird das Herstellverfahren in 2 Schritten durchgeführt , werden im ersten Schritt des erfindungsgemäßen Verfahrens Organopolysiloxane (1) vorzugsweise in Mengen von 0,2 bis 0,7, bevorzugt 0,3 bis 0,6 Grammatom Si-gebundenen Wasserstoff je Mol aliphatischer Doppelbindung in den Polyethern (3) eingesetzt.

Im zweiten Schritt des erfindungsgemäßen Verfahrens werden Organopolysiloxane (2) vorzugsweise in Mengen von 0,1 bis 0,6, bevorzugt 0,2 bis 0,5 Grammatom Si-gebundenen Wasserstoff je Mol aliphatischer Doppelbindung in den Polyethern (3) eingesetzt.

Bei dem erfindungsgemäßen Verfahren werden Organopolysiloxane (1) und (2) insgesamt vorzugsweise in Mengen von 0,5 bis 1,0, bevorzugt 0,6 bis 0,8 Grammatom Si-gebundenen Wasserstoff je Mol aliphatischer Doppelbindung in den Polyethern (3) eingesetzt.

Eine bevorzugte Verfahrensweise ist die Herstellung der Siliconpolyether in einem Verfahrensschritt.

Als Organopolysiloxane (1) werden vorzugsweise lineare, cyclische oder verzweigte Organopolysiloxane aus Einheiten der allgemeinen Formel

$$R_e H_f SiO_{\frac{4-e-f}{2}} \quad (II),$$

wobei

R gleich oder verschieden sein kann und einen einwertigen, von aliphatischen Kohlenstoff-Kohlenstoff-Mehrfachbindungen freien, Kohlenwasserstoffrest mit 1 bis 18 Kohlenstoffatomen bedeutet, e 0, 1, 2 oder 3, f 0, 1 oder 2

und die Summe von e+f≤3 ist,

eingesetzt, mit der Maßgabe, dass mindestens 2 Si-gebundene Wasserstoffatome enthalten sind.

Bevorzugt werden als Organopolysiloxane (1) solche der allgemeinen Formel

$$H_h R_{3-h} SiO(SiR_2O)_o(SiRHO)_p SiR_{3-h}H_h \quad (III)$$

wobei R die oben dafür angegebene Bedeutung hat,

h 0, 1 oder 2, bevorzugt 0 oder 1,

o 0 oder eine ganze Zahl von 1 bis 1000, bevorzugt 10 bis 200, besonders bevorzugt 10 bis 80, und

p 0 oder eine ganze Zahl von 1 bis 40, bevorzugt 2 bis 20, ist, eingesetzt, mit der Maßgabe, dass mindestens 2 Si-gebundene Wasserstoffatome enthalten sind.

Im Rahmen dieser Erfindung soll Formel (III) so verstanden werden, dass o Einheiten -(SiR$_2$O) - und p Einheiten (SiRHO)- in beliebiger Weise, beispielsweise als Block oder statistisch, im Organopolysiloxanmolekül verteilt sein können.

Beispiele für solche Organopolysiloxane (1) sind insbesondere Mischpolymerisate aus Trimethylsiloxan-, Dimethylsiloxan- und Methylhydrogensiloxaneinheiten, Mischpolymerisate aus Dimethylhydrogensiloxan-, Methylhydrogensiloxan-, Dimethylsiloxan- und Trimethylsiloxaneinheiten, Mischpolymerisate aus Trimethylsiloxan-, Dimethylhydrogensiloxan- und Methylhydrogensiloxaneinheiten, Mischpolymerisate aus Methylhydrogensiloxan- und Trimethylsiloxaneinheiten, Mischpolymerisate aus Methylhydrogensiloxan-, Diphenylsiloxan- und Trimethylsiloxaneinheiten, Mischpolymerisate aus Methylhydrogensiloxan-, Dimethylhydrogensiloxan- und Diphenylsiloxaneinheiten, Mischpolymerisate aus Methylhydrogensiloxan-, Phenylmethylsiloxan-, Trimethylsiloxan- und/oder Dimethylhydrogensiloxaneinheiten, Mischpolymerisate aus Methylhydrogensiloxan-, Dimethylsiloxan-, Diphenylsiloxan-, Trimethylsiloxan- und/oder Dimethylhydrogensiloxaneinheiten sowie Mischpolymerisate aus Dimethylhydrogensiloxan-, Trimethylsiloxan-, Phenylhydrogensiloxan-, Dimethylsiloxanund/oder Phenylmethylsiloxaneinheiten.

Die Organopolysiloxane (1) besitzen eine durchschnittliche Viskosität von vorzugsweise 5 bis 5000 mm$^2$/s bei 25°C, bevorzugt 20 bis 500 mm$^2$/s bei 25°C.

Als Organopolysiloxane (2) werden vorzugsweise lineare, cyclische oder verzweigte Organopolysiloxane aus Einheiten der allgemeinen Formel

$$R_k H_l SiO_{\frac{4-k-l}{2}} \quad (IV),$$

wobei

R gleich oder verschieden sein kann und einen SiC-gebundenen einwertigen, von aliphatischen Kohlenstoff-Kohlenstoff-Mehrfachbindungen freien, Kohlenwasserstoffrest mit 1 bis 18 Kohlenstoffatomen bedeutet,

k 0, 1, 2 oder 3,

l 0, 1 oder 2

und die Summe von k+l≤3 ist,

eingesetzt, mit der Maßgabe, dass mindestens 2 Si-gebundene Wasserstoffatome enthalten sind.

Bevorzugt werden als Organopolysiloxane (2) solche der allgemeinen Formel

$$H_gR_{3-g}SiO (SiR_2O)_r(SiRHO)_sSiR_{3-g}H_g \qquad (V)$$

wobei R die oben dafür angegebene Bedeutung hat,
g 0, 1 oder 2, bevorzugt 0 oder 1,
r 0 oder eine ganze Zahl von 10 bis 1000, bevorzugt 20 bis 200, und
s 0 oder eine ganze Zahl von 10 bis 100, bevorzugt 20 bis 50, ist,
eingesetzt, mit der Maßgabe, dass mindestens 2 Si-gebundene Wasserstoffatome enthalten sind.

Im Rahmen dieser Erfindung soll Formel (V) so verstanden werden, dass r Einheiten -(SiR$_2$O)- und s Einheiten -(SiRHO)- in beliebiger Weise, beispielsweise als Block oder statistisch, im Organopolysiloxanmolekül verteilt sein können.

Beispiele für Organopolysiloxane (1) gelten im vollen Umfang auch für Organopolysiloxane (2).

Die Organopolysiloxane (2) besitzen eine durchschnittliche Viskosität von vorzugsweise 50 bis 5000 mm$^2$/s bei 25°C-, bevorzugt 50 bis 500 mm$^2$/s bei 25°C.

Das Verhältnis der Viskositäten von Organopolysiloxane (2) zu Organopolysiloxane (1) beträgt vorzugsweise mindestens 2,0, bevorzugt mindestens 3,0, besonders bevorzugt mindestens 5,0.

Vorzugsweise beträgt das Viskositätsverhältnis von Organopolysiloxane (2) zu Organopolysiloxane (1) höchstens 1000, bevorzugt höchstens 100.

Beispiele für Reste R sind Alkylreste, wie der Methyl-, Ethyl-, n-Propyl-, iso-Propyl-, 1-n-Butyl-, 2-n-Butyl-, iso-Butyl-, tert.-Butyl-, n-Pentyl-, iso-Pentyl-, neo-Pentyl-, tert.-Pentylrest, Hexylreste, wie der n-Hexylrest, Heptylreste, wie der n-Heptylrest, Octylreste, wie der n-Octylrest und iso-Octylreste, wie der 2,2,4-Trimethylpentylrest, Nonylreste, wie der n-Nonylrest, Decylreste, wie der n-Decylrest, Dodecylreste, wie der n-Dodecylrest, und Octadecylreste, wie der n-Octadecylrest; Cycloalkylreste, wie Cyclopentyl-, Cyclohexyl-, Cycloheptyl- und Methylcyclohexylreste; Arylreste, wie der Phenyl-, Naphthyl-, Anthryl- und Phenanthrylrest; Alkarylreste, wie o-, m-, p-Tolylreste, Xylylreste und Ethylphenylreste; und Aralkylreste, wie der Benzylrest, der α- und der β-Phenylethylrest.

Vorzugsweise ist R ein Methylrest. Bevorzugt sind mindestens 99 Mol %, besonders bevorzugt 100 Mol % aller Reste R Methylreste.

Besonders bevorzugt weisen die Organopolysiloxane (1) und (2) neben Si-gebundenen Wasserstoffatomen als SiC-gebundene Kohlenwasserstoffreste R zu 99 Mol %, insbesondere zu 100 Mol % Methylreste auf.

Beispiele für Kohlenwasserstoffreste R$^1$ sind Alkylreste, wie der Methyl-, Ethyl-, n-Propyl-, iso-Propyl-, 1-n-Butyl-, 2-n-Butyl-, iso-Butyl-, tert.-Butyl-, n-Pentyl-, iso-Pentyl-, neo-Pentyl-, tert.-Pentylrest, Hexylreste, wie der n-Hexyl- und der iso-Hexylrest.

Bevorzugt als Rest R$^1$ ist ein Wasserstoffatom.

Als Polyether (3) werden zwei Arten von Polyethern der Formeln (Ib) und (Ic) eingesetzt.

Es werden also immer Polyether unterschiedlicher Polarität miteinander eingesetzt. Während (Ic) ein Homopolymer ist, handelt es sich bei (Ib) um ein Copolymer, dessen molarer Anteil an Ethylenoxyeinheiten (EO-Einheiten) vorzugsweise im Bereich von ca. 1 bis ca. 99 Mol-%, bevorzugt im Bereich von ca. 4 bis 80 Mol-% und besonders bevorzugt im Bereich von ca. 10 bis 65 Mol-% liegt, wobei der Rest aus Propylenoxyeinheiten (PO-Einheiten) besteht.

Es werden bei den Entschäumerformulierungen Siliconpolyether (B) eingesetzt, die durch die Umsetzung eines Gemisches von Polyethern der Formeln (Ib) und (Ic) mit Organopolysiloxanen (1) hergestellt werden.
Der Anteil an Ethylenoxyeinheiten aus den Polyethern der Formeln (Ib) und (Ic), bezogen auf die Gesamtanzahl der eingesetzten Alkylenoxyeinheiten, beträgt höchstens 30 Mol-%. Ein bevorzugter Bereich ist der von 10 bis 30 Mol-%.

Ein besonderer Vorteil der Herstellungsmethode für die erfindungsgemäßen Siliconpolyether (B) ist die Möglichkeit zur präzisen und lückenlosen Einstellung ihrer Polarität, also des Verhältnisses von Organosiloxy-, Ethylenoxy- und Propylenoxybestandteilen, in dem sich durch Variation der Mengenverhältnisse der Polyether der Formeln (Ib) und (Ic) ein weites Gebiet verschiedener Produkte mit nur wenigen Rohstoffen abdecken lässt.

Bevorzugt ist a 1 in Formeln (Ib) und (Ic), und es werden vorzugsweise Allylpolyether eingesetzt.

Beispiele für Polyether der Formel (Ib) sind

$$CH_2=CH-CH_2O (C_2H_4O)_7(C_3H_6O)_{12}H,$$

$$CH_2=CH-CH_2O(C_2H_4O)_{10} (C_3H_6O)_6H,$$

$$CH_2=CH-CH_2O(C_2H_4O)_{20} (C_3H_6O)_{20}H,$$

$$CH_2=CH-CH_2O(C_2H_4O)_{12} (C_3H_6O)_{32}H,$$

$$CH_2=CH-CH_2O(C_2H_4O)_{12}(C_3H_6O)_8CH_3.$$

Beispiele für Polyether der Formel (Ic) sind

$$CH_2=CH-CH_2O(C_3H_6O)_3H$$

$$CH_2=CH-CH_2O(C_3H_6O)_{18}C(=O)CH_3$$

$$CH_2=CH-CH_2O(C_3H_6O)_{30}H .$$

Als die Anlagerung von Si-gebundenem Wasserstoff an aliphatische Doppelbindung fördernde Katalysatoren (4) können auch bei dem erfindungsgemäßen Verfahren die gleichen Katalysatoren eingesetzt werden, die auch bisher zur Förderung der Anlagerung von Si-gebundenem Wasserstoff an aliphatische Doppelbindung eingesetzt werden konnten. Bei den Katalysatoren handelt es sich vorzugsweise um ein Metall aus der Gruppe der Platinmetalle oder um eine Verbindung oder einen Komplex aus der Gruppe der Platinmetalle. Beispiele für solche Katalysatoren sind metallisches und feinverteiltes Platin, das sich auf Trägern, wie Siliciumdioxid, Aluminiumoxid oder Aktivkohle befinden kann, Verbindungen oder Komplexe von Platin, wie Platinhalogenide, z.B. $PtCl_4$, $H_2PtCl_6*6H_2O$, $Na_2PtCl_4*4H_2O$, Platin-Olefin-Komplexe, Platin-Alkohol-Komplexe, Platin-Alkoholat-Komplexe, Platin-Ether-Komplexe, Platin-Aldehyd-Komplexe, Platin-Keton-Komplexe, einschließlich Umsetzungsprodukten aus $H_2PtCl_6*6H_2O$ und Cyclohexanon, Platin-Vinyl-siloxankomplexe, wie Platin-1,3-Divinyl-1,1,3,3-tetramethyl-disiloxankomplexe mit oder ohne Gehalt an nachweisbarem anorganisch gebundenem Halogen, Bis-(gamma-picolin)-platindichlorid, Trimethylendipyridinplatindichlorid, Dicyclopentadienplatindichlorid, Dimethylsulfoxydethylenplatin-(II)-di-chlorid, Cyclooctadien-Platindichlorid, Norbornadien-Platindichlorid, Gamma-picolin-Platindichlorid, Cyclopentadien-Platindichlorid, sowie Umsetzungsprodukte von Platintetrachlorid mit Olefin und primärem Amin oder sekundärem Amin oder primärem und sekundärem Amin, wie das Umsetzungsprodukt aus in 1-Octen gelöstem Platintetrachlorid mit sec.-Butylamin oder Ammonium-Platinkomplexe.

Der Katalysator (4) wird bei dem erfindungsgemäßen Verfahren vorzugsweise in Mengen von 1 bis 50 Gew.-ppm (Gewichtsteilen je Million Gewichtsteilen), bevorzugt in Mengen von 5 bis 20 Gew.-ppm, jeweils berechnet als elementares Platin und bezogen auf das Gesamtgewicht der eingesetzten Komponenten (1), (2) und (3), eingesetzt.

Vorzugsweise wird beim erfindungsgemäßen Verfahren der Katalysator (4) zu Polyether (3) vor der Zudosierung der Organopolysiloxane (1) und (2) zugegeben. Bevorzugt wird ein Teil der Menge des Katalysators im ersten Schritt vorgelegt und im zweiten Schritt die restliche Menge des Katalysators zugegeben, wenn in zwei Schritten gearbeitet wird.

Das erfindungsgemäße Verfahren wird vorzugsweise bei einer Temperatur von 60 bis 120°C, bevorzugt 80 bis 120°C durchgeführt. Vorzugsweise wird das erfindungsgemäße Verfahren beim Druck der umgebenden Atmosphäre, also etwa bei 1020 hPa durchgeführt, es kann aber auch bei höheren oder niedrigeren Drücken durchgeführt werden.

Bei dem erfindungsgemäßen Verfahren können Lösungsmittel mitverwendet werden. Beispiele für Lösungsmittel sind Toluol, Xylol, iso-Propanol, n-Butanol.
Wenn Lösungsmittel mitverwendet werden, werden sie vorzugsweise in Mengen von 5 bis 20 Gew.-% bezogen auf das Reaktionsgemisch eingesetzt.
Die Mitverwendung von Lösungsmittel ist aber nicht bevorzugt.

Als Siliconpolyether (B) werden nach dem erfindungsgemäßen Verfahren vorzugsweise Organopolysiloxane erhalten, die Polyetherreste A ausgewählt aus der Gruppe der allgemeinen Formeln

$$-CH_2-CR^1-(CH_2)_aO(C_2H_4O)_b(C_3H_6O)_cR^1 \qquad (VIIb),$$

$$-CH_2-CR^1-(CH_2)_aO(C_3H_6O)_cR^1 \qquad (VIIc),$$

enthalten, wobei
$R^1$, a, b und c die oben dafür angegebene Bedeutung haben, mit der Maßgabe, dass 2 verschiedene Arten von Polyetherresten A der Formeln (VIIb) und (VIIc) enthalten sind, bei denen der Anteil an Ethylenoxyeinheiten, bezogen auf die Gesamtanzahl der Alkylenoxyeinheiten, höchstens 30 Mol-% beträgt.

Als Siliconpolyether (B) werden nach dem erfindungsgemäßen Verfahren bevorzugt lineare, cyclische oder verzweigte Organopolysiloxane aus Einheiten der allgemeinen Formel

$$A_xR_ySiO_{\frac{4-x-y}{2}} \quad (VI),$$

wobei

A einen Polyetherrest ausgewählt aus der Gruppe der allgemeinen Formeln

$$-CH_2-CR^1-(CH_2)_aO\ (C_2H_4O)_b(C_3H_6O)_cR^1 \qquad (VIIb),$$

$$-CH_2-CR^1-(CH_2)_aO(C_3H_6O)_cR^1 \qquad (VIIc),$$

bedeutet,

R gleich oder verschieden sein kann und einen SiC-gebundenen einwertigen, von aliphatischen Kohlenstoff-Kohlenstoff-Mehrfachbindungen freien, Kohlenwasserstoffrest mit 1 bis 18 Kohlenstoffatomen bedeutet,

$R^1$, a, b und c die oben dafür angegebene Bedeutung haben,

x 0, 1 oder 2,

y 0, 1, 2 oder 3,

und die Summe von $x + y \leq 3$ ist,

erhalten, mit der Maßgabe, dass 2 verschiedene Arten von Polyetherresten A der Formeln (VIIb) und (VIIc) enthalten sind, bei denen der Anteil an Ethylenoxyeinheiten, bezogen auf die Gesamtanzahl der Alkylenoxyeinheiten, höchstens 30 Mol-% beträgt.

Als Siliconpolyether (B) werden nach dem erfindungsgemäßen Verfahren besonders bevorzugt solche der allgemeinen Formel

$$A_zR_{3-z}SiO\ (SiR_2O)_m\ (SiRAO)_nSiR_{3-z}A_z \qquad (VIII)$$

wobei

A und R die oben dafür angegebene Bedeutung haben,

z 0, 1 oder 2, bevorzugt 0 oder 1,

m 0 oder eine ganze Zahl von 1 bis 1000, bevorzugt 10 bis 200, und

n 0 oder eine ganze Zahl von 1 bis 50, bevorzugt 2 bis 20, ist, erhalten, mit der Maßgabe, dass 2 verschiedene Arten von Polyetherresten A der Formeln (VIIb) und (VIIc) enthalten sind, bei denen der Anteil an Ethylenoxyeinheiten, bezogen auf die Gesamtanzahl der Alkylenoxyeinheiten, höchstens 30 Mol-% beträgt.

Im Rahmen dieser Erfindung soll Formel (VIII) so verstanden werden, dass m Einheiten $-(SiR_2O)-$ und n Einheiten $-(SiRAO)-$ in beliebiger Weise, beispielsweise als Block oder statistisch, im Organopolysiloxanmolekül verteilt sein können.

Die nach dem erfindungsgemäßen Verfahren erhaltenen Siliconpolyether besitzen eine Viskosität von vorzugsweise 50 bis 100000 mPa.s bei 25°C, bevorzugt 100 bis 20000 mPa.s bei 25°C.

Die erfindungsgemäßen Entschäumerformulierungen enthalten vorzugsweise

(A) 1 bis 90 Gew-% Antischaummittel auf Basis von Siloxanen,
(B) 0,1 bis 70 Gew.-% des erfindungsgemäßen Siliconpolyether,
(C) 0 bis 20 Gew.-%, bevorzugt 2 bis 20 Gew.-% Emulgatoren,
(D) 0 bis 97 Gew.-% Wasser
jeweils bezogen auf das Gesamtgewicht der Entschäumerformulierungen,
und gegebenenfalls
(E) Konservierungsmittel, Verdicker und weitere Zusätze.

Als Antischaummmittel (A) auf Basis von Siloxanen (im weiteren auch mit Siloxanentschäumer bezeichnet) wird üblicherweise eine Mischung aus Kieselsäure und Polyorganosiloxanen verwendet, wobei die Mischung bevorzugt

(aa) 1 bis 15 Gew.-% einer in situ hydrophobierten, gefällten und/oder pyrogenen Kieselsäure mit einer BET-Oberfläche größer 50 g/m$^2$ und/oder einer vorbehandelten, hydrophoben, gefällten und/oder pyrogenen Kieselsäure mit einer BET-Oberfläche größer 50 g/m$^2$,
(ab) 20 bis 99 Gew.-% eines oder mehrerer Polyorganosiloxane aus Einheiten der allgemeinen Formel

$$R^8_e \, (R^9O)_d SiO_{(4-e-d)/2} \qquad (IX),$$

worin $R^8$ gleich oder verschieden sein kann und einen einwertigen, substituierten und/oder unsubstituierten gesättigten und/oder ungesättigten Kohlenwasserstoffrest mit 1 bis 30 Kohlenstoffatomen je Rest bedeutet,

$R^9$ gleich oder verschieden sein kann und ein Wasserstoffatom oder einen einwertigen, substituierten und/oder unsubstituierten gesättigten und/oder ungesättigten Kohlenwasserstoffrest mit 1 bis 30 Kohlenstoffatomen je Rest bedeutet,

d 0, 1, 2 oder 3 ist, wobei d durchschnittlich ein Wert von kleiner als 0,5 ist,

e 0, 1, 2 oder 3 ist,

mit der Maßgabe, dass die Summe (d+e) < 3 ist und durchschnittlich einen Wert von 1,8 bis 2,4, aufweist,

(ac) 0 bis 10 Gew.-% eines Siliconharzes, welches im wesentlichen aus Einheiten der allgemeinen Formel $R_3SiO_{1/2}$ und $SiO_{4/2}$ besteht, wobei R die oben dafür angegebene Bedeutung hat, und

(ad) 0 bis 80 Gew.-% einer organischen Verbindung mit einem Siedepunkt größer als 100°C, ausgewählt aus Mineralölen, nativen Ölen, Isoparaffinen, Polyisobutylenen, Rückständen aus der Oxoalkoholsynthese, Estern niedermolekularer synthetischer Carbonsäuren, Ethern niedermolekularer Alkohole, Phthalaten, Estern der Phosphorsäure, Polyoxyalkylenen wie z.B. Polyproypenglykolen oder Ethylenoxid-propylenoxid Copolymeren und Estern und Ethern von Polyoxyalkylenen,

wobei die Gew.-% jeweils bezogen sind auf das Gesamtgewicht des Antischaummittels, enthält.

Die in situ Hydrophobierung der Kieselsäure (aa) kann durch mehrstündiges Erhitzen der im Polyorganosiloxan (ab) dispergierten Kieselsäure auf Temperaturen von 100 bis 200 °C erfolgen. Dabei kann die Reaktion durch den Zusatz von Katalysatoren, wie KOH, und von Hydrophobiermitteln, wie kurzkettigen OH-terminierten Polydimethylsiloxanen, Silanen, Silazanen oder Siliconharzen, unterstützt werden. Als Alternative können vorbehandelte, hydrophobierte Kieselsäuren zum Einsatz kommen, oder aber auch eine Kombination von in situ hydrophobierten Kieselsäuren mit vorbehandelten hydrophobierten Kieselsäuren.

Beispiele für Reste $R^8$ in der allgemeinen Formel (II) sind unsubstituierte, verzweigte oder unverzweigte Alkylreste, wie Methyl-, Ethyl-, Propyl-, Isopropyl-, Hexyl-, 2-Ethylhexyl, Octyl-, oder Dodecylreste; substituierte Alkylreste, wie Trifluorpropyl-, Cyanoethyl-, Glycidoxypropyl-, Polyalkylenglycolpropyl-, Aminopropyl- oder Aminoethylaminopropylreste; ungesättigte Reste, wie Vinyl-, Methacryloxypropyl- oder Allylreste; aromatische Reste, wie Phenyl-, Tolyl-, Xylyl-, Naphthyl-, Anthracyl- oder Benzylreste. Besonders bevorzugte Reste $R^8$ sind der Methyloder Phenylrest, wobei es besonders bevorzugt ist, wenn mehr als 80 Mol-% der Reste $R^8$ Methylreste sind.

Beispiele für Reste $R^9$ in der allgemeinen Formel (II) sind unsubstituierte, verzweigte oder unverzweigte Alkylreste, wie Methyl-, Ethyl-, Propyl-, Isopropyl-, Hexyl-, 2-Ethylhexyl, Octyl-, oder Dodecylreste; substituierte Alkylreste, wie Trifluorpropyl-, Cyanoethyl-, Glycidoxypropyl-, Polyalkylenglycolpropyl-, Aminopropyl- oder Aminoethylaminopropylreste; ungesättigte Reste, wie Vinyl-, Methacryloxypropyl- oder Allylreste; aromatische Reste, wie Phenyl-, Tolyl-, Xylyl-, Naphthyl-, Anthracyl- oder Benzylreste.

Beispiele für Verbindungen der Formel (IX) sind Polydimethylsiloxane mit Viskositäten von 100 bis 1.000.000 mPa·s bei 25°C. Diese Polydimethylsiloxane können z. B. durch den Einbau von $CH_3SiO_{3/2}$- oder $SiO_{4/2}$-Einheiten verzweigt sein. Diese verzweigten oder anvernetzten Siloxane weisen dann viskoelastische Eigenschaften auf.

Derartige verzweigte viskoelastische Polyorganosiloxane können beispielsweise erhalten werden durch Umsetzung des Dimethyldichlorsilan-Hydrolyseproduktes oder von hydroxyterminierten Polydimethylsiloxanen mit einem trimethylsilylterminierten Polydimethylsiloxan und einer Verbindung, ausgewählt aus einem Silan mit mindestens drei hydrolysierbaren Gruppen, wie Tetraethoxysilan, Methyltrimethoxysilan oder Methyltriacetoxysilan, oder einem Siliconharz, welches im wesentlichen aus $(CH_3)_3SiO_{1/2}$- und $SiO_2$-Einheiten im Verhältnis von 2 zu 1 bis 1 zu 2 aufgebaut ist, in Gegenwart eines Katalysators.

Eine weitere Variante zur Herstellung von verzweigten viskoelastischen Polyorganosiloxanen ist die Umsetzung von einem Organosiloxan $X^1$ mit statistisch verteilten, durchschnittlich weniger als 2 funktionellen Gruppen pro Molekül mit einem Organosiloxan $X^2$ mit statistisch verteilten, durchschnittlich mehr als 2 funktionellen Gruppen pro Molekül, wobei pro Siloxan $X^1$ oder $X^2$ jeweils nur eine Art an funktionellen Gruppen vorliegt, in Gegenwart eines Hydrosilylierungen fördernden Katalysators, wie beispielsweise Platin oder Platinverbindungen.

Weiterhin kann das Antischaummittel auf Basis von Siloxanen 0,1 bis 10 Gew.-%, bevorzugt 0,5 bis 5 Gew.-%, mindestens eines Polyorganosiloxans (ab') der allgemeinen Formel (IX) enthalten, worin $R^e$ einen Methylrest und $R^9$ einen linearen und/oder verzweigten Kohlenwasserstoffrest mit mindestens 6 Kohlenstoffatomen bedeuten, d einen Wert von 0,005 bis 0,5 annimmt und die Summe (d+e) einen Wert von 1,9 bis 2,1 annimmt. Derartige Produkte sind beispielsweise durch alkalisch katalysierte Kondensation von silanolterminierten Polydimethylsiloxanen einer Viskosität 50 bis 50.000 mPa·s bei 25°C und aliphatischen Alkoholen mit mehr als 6 Kohlenstoffatomen, wie Isotridecylalkohol, n-Octanol, Stearylalkohol, 4-Ethylhexadecanol oder Eicosanol, zugänglich.

In den erfindungsgemäßen Entschäumerformulierungen können weitere bekannte und bei Entschäumerformulierungen übliche Zusätze oder Hilfsstoffe enthalten sein, beispielsweise weitere Füllstoffe, wie Aluminiumoxid, Metallseifen, hydrophobiertes Quarzmehl oder fein verteilte hydrophobe Polyurethane. Aber auch der Zusatz von als Entschäumeröle wirkenden Substanzen, wie Mineralöle, Paraffinöle, Fettsäureester, Fettalkohole, Polyoxyalkylene, wie z.B. Polyproypenglykole oder Ethylenoxid-propylenoxid Copolymere, Ester und Ether von Polyoxyalkylenen, und Wachse in Mengen von 1 bis 99 Gew.-%, bezogen auf das Gesamtgewicht der Formulierung, ist möglich. Weiterhin können als Verdicker bekannte Verbindungen, wie Polyacrylsäure, Polyacrylate, Celluloseether, wie Carboxymethylcellulose und Hydroxyethylcellulose, natürliche Gume, wie Xanthan Gum und Polyurethane, zugesetzt werden.

Das Herstellen der erfindungsgemäßen Entschäumerformulierung erfolgt nach bekannten Verfahren, beispielsweise unter Anwendung von hohen Scherkräften in Kolloidmühlen oder Rotor-Stator-Homogenisatoren. Dabei kann der Mischvorgang bei reduziertem Druck erfolgen, um das Einmischen von Luft, welche in hochdispersen Füllstoffen enthalten ist, zu verhindern.

Bevorzugt ist die Anwendung der erfindungsgemäßen Entschäumerformulierungen in Öl-in-Wasser-Emulsionen (O/W-Emulsionen). Die in den erfindungsgemäßen Entschäumerformulierungen eingesetzten speziellen Siliconpolyether weisen Tensideigenschaften auf, sie sind deshalb auch als Emulgatoren für die Bildung von Öl-in-Wasser-Emulsionen, ausgehend von Antischaummitteln auf der Basis von Siloxanen, geeignet. Den Entschäumerformulierungen, wenn sie als Emulsionen eingesetzt werden, können noch zusätzliche organische Emulgatoren, welche O/W-Emulsionen auf der Basis von Siloxanen bilden können, zugesetzt werden. Die Siliconpolyether (B) können gemeinsam mit dem Antischaummittel (A) emulgiert werden, oder die Siliconpolyether (B) können aber auch einfach nach der Herstellung einer Emulsion von dem Antischaummittel (A) der Antischaummittelemulsion direkt oder in Form einer Emulsion zugesetzt werden, um eine Wirkungsverbesserung zu erzielen.

Die erfindungsgemäßen Entschäumerformulierungen in Form von O/W-Emulsionen enthalten bevorzugt

(A) 2 bis 50 Gew.-% Antischaummittel auf Basis von Siloxanen,
(B) 0,1 bis 40 Gew.-%, insbesondere 0,3 bis 40 Gew.-%, des erfindungsgemäßen Siliconpolyethers,
(C) 2 bis 20 Gew.-% eines Emulgators sowie
(D) 50 bis 95 Gew.-% Wasser,
jeweils bezogen auf das Gesamtgewicht der Entschäumerformulierungen,
und gegebenenfalls
(E) Konservierungsmittel, Verdicker und weitere Zusätze.

Die zur Herstellung der Emulsionen benötigten Emulgatoren können anionisch, kationisch oder nichtionogen sein und sind dem Fachmann zur Herstellung von stabilen Siliconemulsionen bekannt. Bevorzugt werden Emulgatormischungen eingesetzt, wobei mindestens ein nichtionogener Emulgator, wie beispielsweise Sorbitanfettsäureestern, ethoxylierten Sorbitanfettsäureestern, ethoxylierten Fettsäuren, ethoxylierten linearen oder verzweigten Alkoholen mit 10 bis 20 Kohlenstoffatomen und/oder Glycerinestern, enthalten sein sollte.

Technologien zur Herstellung von Siliconemulsionen sind bekannt. Üblicherweise erfolgt die Herstellung durch einfaches Verrühren aller Bestandteile und anschließendes Homogenisieren mit Rotor-Stator-Homogenisatoren, Kolloidmühlen oder Hochdruckhomogenisatoren.

Die erfindungsgemäßen Entschäumerformulierungen sind überall dort einsetzbar, wo bei Prozessen eine störende Schaumbildung auftritt, die vermindert oder ganz beseitigt werden soll. Das ist z. B. die Anwendung in Wasch- und Reinigungsmitteln, die Bekämpfung von Schaum in Abwasseranlagen, bei Textilfärbeverfahren, bei der Erdgaswäsche, in Dispersionen und in Kohlenwasserstoffen.

Insbesondere sind die erfindungsgemäßen Entschäumerformulierungen hervorragend zum Entschäumen von bei der Zellstoffherstellung anfallenden wässrigen Medien einsetzbar.

**Ausführungsbeispiele**

Alle im Folgenden angegebenen Teile und Prozentsätze sind (wenn nicht anders angegeben) auf das Gewicht bezogen. Die Viskositäten beziehen sich auf 25°C.

<u>(A) Herstellung der Siloxanentschäumer</u>

**A1:** 94 Teile Polydimethylsiloxan einer Viskosität von 12.500 mm$^2$/s und 6 Teile einer hydrophilen Kieselsäure wurden mit einer Kolloidmühle (Spalt 0,6 mm) dreimal homogenisiert. Durch 10 stündiges Erhitzen der Mischung auf 190 °C wurde die Kieselsäure in situ hydrophobiert.

**A2:** 400 Teile eines hydroxyterminierten Polydimethylsiloxans einer Viskosität von 65 mm²/s, 40 Teile trimethylsiloxyterminiertes Polydimethylsiloxan einer Viskosität von 40 mm²/s, 4 Teile Methyltrimethoxysilan und 1 Teil eines 0,5%igen Phosphornitridchloridkatalysators wurden auf 100 °C erhitzt. Im Verlauf von 20 Minuten wurde der Druck auf 35 mbar abgesenkt. Danach erfolgte die Neutralisation des Katalysators mit 0,03 Teilen Triisooctylamin. Das erhaltene Polyorganosiloxan wies eine Viskosität von 19.000 mm²/s auf. In 95 Teile dieses Öles wurden 5 Teile einer vorbehandelten hydrophoben Kieselsäure eingearbeitet und mit einer Kolloidmühle homogensiert.

**A3:** Eine Mischung aus 89,3 Teilen eines trimethylsiloxyterminierten Polydimethylsiloxans einer Viskosität von 5.000 mm²/s, 5 Teilen einer pyrogenen hydrophilen Kieselsäure mit einer BET-Oberfläche von 300 m²/g, 0,7 Teilen einer 20%igen methanolischen KOH, 2,5 Teilen eines Siliconharzes aus 40 mol% Trimethylsiloxyeinheiten und 60 mol% $SiO_{4/2}$-Einheiten und 2,5 Teilen eines Siloxans, das durch Kondensation von Eicosanol mit einem hydroxyterminierten Polydimethylsiloxan einer Viskosität von 65 mm²/s hergestellt wurde, wurden 2 h auf 150 °C erhitzt. Nach Abkühlen wurde die Mischung mit einer Kolloidmühle homogenisiert.

(B) Herstellung der Siliconpolyether

Herstellung des erfindungsgemäßen Siliconpolyethers

(**Polymer 1**) :

71,2 g eines Allylpolyethers mit der Jodzahl 14,4 und einem EO/PO-Verhältnis von 0,936 (entsprechend 40 mEqu. C = C) werden mit 76,6 g eines reinen Allylpolypropoxylates mit der Jodzahl 15,6 (entsprechend 47 mEqu. C = C) homogen vermischt. Der Anteil der EO-Gruppen an der eingesetzten Gesamtzahl der Alkylenoxygruppen beträgt 25 Mol-%. Das Gemisch wird mit 60 mg Limonenoxid und 0,27 g Hexachloroplatinsäurelösung in Isopropanol (entsprechend 1,0 mg Pt) versetzt und auf 85 °C erwärmt. Innerhalb einer halben Stunde werden 37,9 g eines Polysiloxans aus Hydrogendimethylsiloxy-, Hydrogenmethylsiloxyund Dimethylsiloxyeinheiten mit 0,165 % Aktivwasserstoff und einer Viskosität von 148 mm²/s zudosiert. 10 Minuten nach Dosierende klart der zunächst trübe Ansatz auf, nach 60 Minuten ist im IR-Spektrum kein SiH mehr nachweisbar. Das klare Produkt hat eine Viskosität von 2165 mm²/s bei 25 °C.

Vergleichsversuch 1 (**Polymer 2**):

Es wurde als Polymer 2 ein handelsübliches unverzweigtes Polyether-Polysiloxan-Copolymer mit einer Viskosität von 1100 mPa.s bei 25°C und einem Trübungspunkt von >25°C verwendet. Die Kettenlänge des seitenständigen Polyether-Polysiloxan-Copolymers beträgt ca. 50 Si-Einheiten, das Verhältnis der Dimethylsiloxy(D)- zu Methylpolyethersiloxy(D')-Einheiten beträgt ca. 7:1 und der Mol%-Anteil des EO-Anteils ist 74% und der von PO beträgt 26%.

Vergleichsversuch 2 gemäß US 5,271,868 (**Polymer 3**) :

119,7 g eines Allylpolyethers mit der Jodzahl 16,0 und einem EO-Anteil von 19 Mol-% (entsprechend 80 mEqu. C = C) werden mit 30,4 g eines Allylpolyethers mit der Jodzahl 33.4 und einem EO-Anteil von 80 Mol-% (entsprechend 40 mEqu. C = C) homogen vermischt. Der Anteil der EO-Gruppen an der Gesamtzahl der eingesetzten Alkylenoxygruppen $G^2$ und $G^3$ beträgt 33 Mol-%. In diese Mischung dosiert man zusätzlich 4,5 g 1-Octen, sowie 60 mg Limonenoxid und 0,27 g Hexachloroplatinsäurelösung in Isopropanol (entsprechend 1,0 mg Pt). Nach Erwärmen auf 85°C dosiert man 34,9 g eines Polysiloxans aus Hydrogenmethylsiloxy, Dimethylsiloxy- und Trimethylsiloxyeinheiten mit 0,316 % Aktivwasserstoff und einer Viskosität von 46 mm²/s. Nach 2 Stunden ist im IR-Spektrum kein SiH mehr nachweisbar. Das klare Produkt hat bei 25°C eine Viskosität von 980 mm²/s. Das Verhältnis $G^2/G^3$ beträgt 2,0, die charakteristischen Indices eines durchschnittlichen Siliconpolyethermoleküls sind m = 5 , n = 2,5 und q = 3,5. (vgl. US 5,271,868)

(C) Herstellung und Prüfung der Entschäumerformulierungen

**Prüfung der Wirksamkeit (Schwarzlaugentest):**

400 ml Schwarzlauge (Hardwood aus der Verarbeitung von Birken von der Fa. UPM-Kymmene Oy Kymi, Kuusankoski) werden- innerhalb von 15 Minuten auf 80°C aufgeheizt und danach in einen 1 l Messzylinder überführt, der mit einem Thermostat auf 80°C temperiert wird. Nach Zugabe von 5 mg siliziumorganischen Polymeren (die Summe von Siliconentschäumer A und Siliconpolymer B)
in Form der hergestellten Entschäumerformulierung wurde die Schwarzlauge mit einer Geschwindigkeit von 1,6 1/min umgepumpt, immer dann (insgesamt 2 mal), wenn im Messzylinder eine Schaumhöhe von 5 cm erreicht war, wurden sofort 5 mg Silicon zugegeben (insgesamt 15 mg Silicon). Es wurde die Zeit t zwischen dem Beginn des Testes und dem Zeitpunkt nach der letzten Zugabe, wenn der Schaum erneut auf 5 cm gestiegen war, gemessen.
Je länger dieser Zeitraum t ist, desto wirksamer ist der Entschäumer.

**Beispiele 1 bis 3 (C11, C12, C13) sowie**

**Vergleichsversuche 1 bis 6 (V11, V12 und V13 mit Polymer 2 und V14, V15 und V16 mit Polymer 3):**

Die Herstellung der erfindungsgemäßen Entschäumerformulierungen C11, C12, C13 und der Entschäumerformulierungen V11, V12 und V13 sowie V14, V15 und V16 gemäß Vergleichsversuchen erfolgte durch einfaches Mischen von 90 Teilen des in der Tabelle angegebenen Siliconentschäumers und 10 Teilen des in der Tabelle angegebenen Siliconpolyethers mit einem Labordissolver. Zur Prüfung wurde eine Mischung aus 40 Teilen dieser Entschäumerformulierung und 60 Teilen eines Gemisches aus aliphatischen Kohlenwasserstoffen einer Viskosität von 3 $mm^2/s$ und einem Flammpunkt > 100 °C mit einem Labordissolver bei 1.000 $min^{-1}$ hergestellt.
Die Ergebnisse der Prüfung der Wirksamkeit sind in der Tabelle zusammengefasst.

**Beispiele 4 bis 6 (C21, C22 und C23) und**

**Vergleichsversuche 4 bis 6 (V21, V22 und V23 mit Polymer 2):**

Zur Herstellung der erfindungsgemäßen Entschäumerformulierungen C21, C22 und C23 und der Entschäumerformulierungen V21, V22 und V23 gemäß Vergleichsversuchen wurden 20 Teile des in der Tabelle angegebenen Siliconentschäumers, 5 Teile Sorbitanmonostearat, 5 Teile Polyoxyethylen(40)stearat, und 2 Teile des in der Tabelle angegebenen Siliconpolyethers bei 70°C vermischt. 10 Teile einer 1%igen Lösung von Xanthan-Gum, konserviert mit 0,5 % Formaldehyd, wurden mit einem Flächenrührer bei 600 $min^{-1}$ eingerührt. Innerhalb von 3 Minuten wurden portionsweise 55 Teile Wasser zugegeben und 15 min bei 1.000 $min^{-1}$ nachgerührt.
Die Ergebnisse der Prüfung der Wirksamkeit sind in der Tabelle zusammengefasst.

**Beispiele 7 bis 9 (C31, C32 und C33) und**

**Vergleichsversuche 7 und 9 (V31, V32 und V33 mit Polymer 2 ):**

Zur Herstellung der erfindungsgemäßen Entschäumerformulierungen C31, C32 und C33 sowie der Entschäumerformulierungen V31, V32 und V33 gemäß Vergleichsversuchen wurden 20 Teile des in der Tabelle angegebenen Siloxanentschäumers, 4 Teile Polyoxyethylen(4)stearat und 2 Teile Polyoxyethylen(40)stearat,
bei 70°C vermischt. Innerhalb von 10 Minuten wurden portionsweise 69 Teile Wasser zugegeben. In die erhaltenen Emulsionen wurden abschließend 2 Teile des in der Tabelle angegebenen Siliconpolyethers gegeben und 15 Minuten bei 1.000 $min^{-1}$ nachgerührt.
Die Ergebnisse der Prüfung der Wirksamkeit sind in der Tabelle zusammengefasst.

Tabelle: Rezeptur und Prüfergebnisse der Entschäumerformulierungen

| Beispiel bzw. Vergleichsversuch | Siliconentschäumer | Polysiloxanscopolymer | Schwarzlaugentest, t in s |
|---|---|---|---|
| C11 | A1 | Polymer 1 | 650 |
| C12 | A2 | Polymer 1 | 793 |
| C13 | A3 | Polymer 1 | 840 |
| V11 nicht erfindungsgemäß | A1 | Polymer 2 | 576 |
| V12 nicht erfindungsgemäß | A2 | Polymer 2 | 625 |
| V13 nicht erfindungsgemäß | A3 | Polymer 2 | 758 |
| V14 nicht erfindungsgemäß | A1 | Polymer 3 | 598 |
| V15 nicht erfindungsgemäß | A2 | Polymer 3 | 765 |
| V16 nicht erfindungsgemäß | A3 | Polymer 3 | 659 |
| C21 | A1 | Polymer 1 | 890 |

(fortgesetzt)

| Beispiel bzw. Vergleichsversuch | Siliconentschäumer | Polysiloxanscopolymer | Schwarzlaugentest, t in s |
|---|---|---|---|
| C22 | A2 | Polymer 1 | 954 |
| C23 | A3 | Polymer 1 | 1012 |
| V21 nicht erfindungsgemäß | A1 | Polymer 2 | 812 |
| V22 nicht erfindungsgemäß | A2 | Polymer 2 | 879 |
| V23 nicht erfindungsgemäß | A3 | Polymer 2 | 924 |
| C31 | A1 | Polymer 1 | 865 |
| C32 | A2 | Polymer 1 | 957 |
| C33 | A3 | Polymer 1 | 1048 |
| V31 nicht erfindungsgemäß | A1 | Polymer 2 | 830 |
| V32 nicht erfindungsgemäß | A2 | Polymer 2 | 893 |
| V33 nicht erfindungsgemäß | A3 | Polymer 2 | 969 |

Die deutlich verbesserte Wirksamkeit der erfindungsgemäßen Entschäumerformulierungen gegenüber dem Stand der Technik (Vergleichsversuche) ist aufgrund der wesentlich höheren Werte für t offensichtlich.

Die Wiederholung der Entschäumerprüfung in einer Softwood-Schwarzlauge (Kiefer) bestätigte die überragende Wirksamkeit der erfindungsgemäßen Entschäumerformulierungen.

## Patentansprüche

1. Entschäumerformulierungen enthaltend

(A) Mischung aus Kieselsäure und Polyorganosiloxanen als , Antischaummmittel auf der Basis von Siloxanen und
(B) Siliconpolyether herstellbar indem

in einem ersten Schritt
Organopolysiloxane (1), die einen Gehalt von 0,05 bis 1,6 Gew.-% Si-gebundene Wasserstoffatome aufweisen, mit ungesättigten Polyethern (3) ausgewählt aus der Gruppe der allgemeinen Formeln:

$$CH_2=CR^1\text{-} (CH_2)_aO (C_2H_4O)_b (C_3H_6O)_cR^1 \qquad (Ib)$$

$$CH_2=CR^1\text{-} (CH_2)_aO(C_3H_6O)_cR^1 \qquad (Ic),$$

umgesetzt werden, wobei
$R^1$ ein Wasserstoffatom oder einen Kohlenwasserstoffrest mit 1 bis 6 Kohlenstoffatomen bedeutet,
a 0 oder eine ganze Zahl von 1 bis 16 ist,
b eine ganze Zahl von 1 bis 50 ist und
c eine ganze Zahl von 1 bis 50 ist,
mit der Maßgabe, dass die Summe aus b+c mindestens 10 ist und dass eine Mischung aus zwei verschiedenen Arten von Polyethern der Formeln (Ib) und (Ic) eingesetzt werden, bei denen der Anteil an Ethylenoxyeinheiten, bezogen auf die Gesamtanzahl der eingesetzten Alkylenoxyeinheiten, höchstens 30 Mol-%, beträgt,
und gegebenenfalls in einem zweiten Schritt das Reaktionsprodukt aus (1) und (3) weiter umgesetzt wird mit Organopolysiloxanen (2), die einen Gehalt von 0,01 bis 0,5 Gew.-% Si-gebundene Wasserstoffatome aufweisen, mit der Maßgabe, dass die Umsetzungen im ersten und zweiten Schritt in Gegenwart von die Anlagerung von Si-gebundenen Wasserstoff an aliphatische Doppelbindungen fördernde Katalysatoren (4) durchgeführt werden und dass das Verhältnis der Gewichtskonzentration von Si-gebundenem Wasserstoff in Organopolysiloxan (1) zur Gewichtskonzentration von Si-gebundenem Wasserstoff in Organopolysiloxan (2) mindestens 1,5, bevorzugt mindestens 2,0 beträgt.

2. Entschäumerformulierungen nach Anspruch 1, **dadurch gekennzeichnet, dass** als Organopolysiloxane (1) solche der allgemeinen Formel

$$H_hR_{3-h}SiO\ (SiR_2O)_o(SiRHO)_pSiR_{3-h}H_h \qquad (III)$$

eingesetzt werden, wobei

R gleich oder verschieden sein kann und einen SiC-gebundenen einwertigen, von aliphatischen Kohlenstoff-Kohlenstoff-Mehrfachbindungen freien, Kohlenwasserstoffrest mit 1 bis 18 Kohlenstoffatomen, vorzugsweise einen Methylrest, bedeutet,

h 0, 1 oder 2, bevorzugt 0 oder 1,

o 0 oder eine ganze Zahl von 1 bis 1000, bevorzugt 10 bis 200, und

p 0 oder eine ganze Zahl von 1 bis 40, bevorzugt 2 bis 20, ist,

eingesetzt, mit der Maßgabe, dass mindestens 2 Si-gebundene Wasserstoffatome enthalten sind.

3. Entschäumerformulierungen nach Anspruch 1 oder 2, **dadurch gekennzeichnet, dass** als Siliconpolyether (B) Organopolysiloxane erhalten werden, die Polyetherreste A ausgewählt aus der Gruppe der allgemeinen Formeln

$$-CH_2-CR^1-\ (CH_2)_aO\ (C_2H_4O)_b\ (C_3H_6O)_cR^1 \qquad (VIIb),$$

$$-\ CH_2-CR^1-\ (CH_2)_aO(C_3H_6O)_cR^1 \qquad (VIIC),$$

enthalten, wobei

$R^1$, a, b und c die im Anspruch 1 dafür angegebene Bedeutung haben,

mit der Maßgabe, dass 2 verschiedene Arten von Polyetherresten A der Formeln (VIIb) und (VIIc) enthalten sind, bei denen der Anteil an Ethylenoxyeinheiten, bezogen auf die Gesamtanzahl der Alkylenoxyeinheiten, höchstens 30 Mol-%, beträgt.

4. Entschäumerformulierungen nach einem der Ansprüche 1 bis 3, **dadurch gekennzeichnet, dass** als Siliconpolyether (B) Organopolysiloxane der allgemeinen Formel

$$A_zR_{3-z}SiO\ (SiR_2O)_m\ (SiRAO)_nSiR_{3-z}A_z \qquad (VIII)$$

erhalten werden, wobei

A einen Polyetherrest ausgewählt aus der Gruppe der allgemeinen Formeln

$$-CH_2-CR^1-\ (CH_2)_aO(C_2H_4O)_b(C_3H_6O)_cR^1 \qquad (VIIb),$$

$$-CH_2-CR^1-\ (CH_2)_aO\ (C_3H_6O)_cR^1 \qquad (VIIc),$$

bedeutet,

R die im Anspruch 2 dafür angegebene Bedeutung hat, $R^1$, a, b und c die in Anspruch 1 dafür angegebene Bedeutung haben,

z 0, 1 oder 2, bevorzugt 0 oder 1,

m 0 oder eine ganze Zahl von 1 bis 1000, bevorzugt 10 bis 200, und

n 0 oder eine ganze Zahl von 1 bis 50, bevorzugt 2 bis 20, ist,

mit der Maßgabe, dass 2 verschiedene-Arten von Polyetherresten A der Formeln (VIIb) und (VIIc) enthalten sind, bei denen der Anteil an Ethylenoxyeinheiten, bezogen auf die Gesamtanzahl der Alkylenoxyeinheiten, höchstens 30 Mol-%, beträgt.

5. Entschäumerformulierungen nach einem der Ansprüche 1 bis 4, **dadurch gekennzeichnet, dass** die Siliconpolyether (B) in Form von wässrigen Emulsionen oder Microemulsionen eingesetzt werden.

6. Entschäumerformulierungen nach einem der Ansprüche 1 bis 5, **dadurch gekennzeichnet, dass** sie enthalten

(A) 1 bis 90 Gew-% Antischaummittel auf Basis von Siloxanen,
(B) 0,1 bis 50 Gew.-% des Siliconpolyethers nach einem der Ansprüche 1 bis 4,
(C) 0 bis 20 Gew.-%, vorzugsweise 2 bis 20 Gew.-% Emulgatoren,
(D) 0 bis 97 Gew.-% Wasser,

jeweils bezogen auf das Gesamtgewicht der Entschäumerformulierungen,
und gegebenenfalls
(E) Konservierungsmittel, Verdicker und weitere Zusätze.

**7.** Entschäumerformulierungen nach einem der Ansprüche 1 bis 6, **dadurch gekennzeichnet, dass** sie O/W-Emulsionen sind und enthalten

(A) 2 bis 50 Gew-% Antischaummittel auf Basis von Siloxanen,
(B) 0,1 bis 40 Gew.-% des Siliconpolyether nach einem der Ansprüche 1 bis 4,
(C) 2 bis 20 Gew.-% eines Emulgators,
(D) 50 bis 95 Gew.-% Wasser,
jeweils bezogen auf das Gesamtgewicht der Entschäumerformulierungen,
und gegebenenfalls
(E) Konservierungsmittel, Verdicker und weitere Zusätze.

**8.** Entschäumerformulierungen nach einem der Ansprüche 1 bis 7, **dadurch gekennzeichnet, dass** die Siliconpolyether (B) gemeinsam mit dem Antischaummittel (A) emulgiert werden, oder die Siliconpolyether (B) nach der Herstellung einer Emulsion von dem Antischaummittel (A) der Antischaummittelemulsion direkt oder in Form einer Emulsion zugesetzt werden.

**9.** Verwendung von Entschäumerformulierungen nach einem der Ansprüche 1 bis 8 zum Entschäumen von bei der Zellstoffherstellung anfallenden wässrigen Medien.

**10.** Siliconpolyether (B) herstellbar indem
in einem ersten Schritt
Organopolysiloxane (1), die einen Gehalt von 0,05 bis 1,6 Gew.-% Si-gebundene Wasserstoffatome aufweisen, mit ungesättigten Polyethern (3) ausgewählt aus der Gruppe der allgemeinen Formeln:

$$CH_2=CR^1\text{-}(CH_2)_aO(C_2H_4O)_b(C_3H_6O)_eR^1 \qquad (Ib)$$

$$CH_2=CR^1\text{-}(CH_2)_aO(C_3H_6O)_cR^1 \qquad (Ic),$$

umgesetzt werden, wobei
$R^1$ ein Wasserstoffatom oder einen Kohlenwasserstoffrest mit 1 bis 6 Kohlenstoffatomen bedeutet,
a 0 oder eine ganze Zahl von 1 bis 16 ist,
b eine ganze Zahl von 1 bis 50 ist und
c eine ganze Zahl von 1 bis 50 ist,
mit der Maßgabe, dass die Summe aus b+c mindestens 10 ist und dass eine Mischung aus zwei verschiedenen Arten von Polyethern der Formeln (Ib) und (Ic) eingesetzt werden, bei denen der Anteil an Ethylenoxyeinheiten, bezogen auf die Gesamtanzahl der eingesetzten Alkylenoxyeinheiten, höchstens 30 Mol-%, beträgt,
und gegebenenfalls in einem zweiten Schritt das Reaktionsprodukt aus (1) und (3) weiter umgesetzt wird mit Organopolysiloxanen (2), die einen Gehalt von 0,01 bis 0,5 Gew.-% Si-gebundene Wasserstoffatome aufweisen, mit der Maßgabe, dass die Umsetzungen im ersten und zweiten Schritt in Gegenwart von die Anlagerung von Si-gebundenen Wasserstoff an aliphatische Doppelbindungen fördernde Katalysatoren (4) durchgeführt werden und dass das Verhältnis der Gewichtskonzentration von Si-gebundenem Wasserstoff in Organopolysiloxan (1) zur Gewichtskonzentration von Si-gebundenem Wasserstoff in Organopolysiloxan (2) mindestens 1,5, bevorzugt mindestens 2,0 beträgt.

**Claims**

**1.** Defoamer formulations comprising

(A) mixture of silica and polyorganosiloxanes as siloxane-based antifoams and
(B) silicone polyethers preparable by in a first step reacting organopolysiloxanes (1) containing from 0.05% to 1.6% by weight of Si-bonded hydrogen atoms with unsaturated polyethers (3) selected from the group of the general formulae:

$$CH_2=CR^1-(CH_2)_aO(C_2H_4O)_b(C_3H_6O)_cR^1 \qquad (Ib)$$

$$CH_2=CR^1-(CH_2)_aO(C_3H_6O)_cR^1 \qquad (Ic),$$

where

$R^1$ is a hydrogen atom or a hydrocarbon radical having 1 to 6 carbon atoms,

a is 0 or an integer from 1 to 16,

b is an integer from 1 to 50, and

c is an integer from 1 to 50,

with the proviso that the sum of b+c is at least 10 and that a mixture of two different kinds of polyethers of the formulae (Ib) and (Ic) is used, in which the fraction of ethyleneoxy units, based on the total number of alkyleneoxy units used, is not more than 30 mol%,

and optionally in a second step further reacting the reaction product from (1) and (3) with organopolysiloxanes (2) containing from 0.01% to 0.5% by weight of Si-bonded hydrogen atoms,

with the proviso that the reactions in the first and second steps are carried out in the presence of catalysts (4) which promote the addition of Si-bonded hydrogen to aliphatic double bonds, and that the ratio of the weight concentration of Si-bonded hydrogen in organopolysiloxane (1) to the weight concentration of Si-bonded hydrogen in organopolysiloxane (2) is at least 1.5, preferably at least 2.0.

2. Defoamer formulations according to Claim 1, **characterized in that** organopolysiloxanes (1) used are those of the general formula

$$H_hR_{3-h}SiO(SiR_2O)_o(SiRHO)_pSiR_{3-h}H_h \qquad (III)$$

where

R may be identical or different and is an SiC-bonded monovalent hydrocarbon radical having 1 to 18 carbon atoms and being free from aliphatic carbon-carbon multiple bonds, preferably a methyl radical,

h is 0, 1 or 2, preferably 0 or 1,

o is 0 or an integer from 1 to 1000, preferably 10 to 200, and

p is 0 or an integer from 1 to 40, preferably 2 to 20,

with the proviso that at least 2 Si-bonded hydrogen atoms are present.

3. Defoamer formulations according to Claim 1 or 2, **characterized in that** silicone polyethers (B) obtained are organopolysiloxanes which comprise polyether radicals A selected from the group of the general formulae

$$-CH_2-CR^1-(CH_2)_aO(C_2H_4O)_b(C_3H_6O)_cR^1 \qquad (VIIb),$$

$$-CH_2-CR^1-(CH_2)_aO(C_3H_6O)_cR^1 \qquad (VIIC),$$

where

$R^1$, a, b and c have the definition stated for them in Claim 1,

with the proviso that 2 different kinds of polyether radicals A of the formulae (VIIb) and (VIIc) are present in which the fraction of ethyleneoxy units, based on the total number of alkyleneoxy units, is not more than 30 mol%.

4. Defoamer formulations according to any of Claims 1 to 3, **characterized in that** silicone polyethers (B) obtained are organopolysiloxanes of the general formula

$$A_zR_{3-z}SiO(SiR_2O)_m(SiR_AO)_nSiR_{3-z}A_z \qquad (VIII)$$

where

A is a polyether radical selected from the group of the general formulae

$$-CH_2-CR^1-(CH_2)_aO(C_2H_4O)_b(C_3H_6O)_cR^1 \qquad (VIIb),$$

$$-CH_2-CR^1-(CH_2)_aO(C_3H_6O)_cR^1 \qquad (VIIc),$$

R has the definition stated for it in Claim 2,

$R^1$, a, b and c have the definition stated for them in Claim 1,

z is 0, 1 or 2, preferably 0 or 1,
m is 0 or an integer from 1 to 1000, preferably 10 to 200, and
n is 0 or an integer from 1 to 50, preferably 2 to 20,
with the proviso that 2 different kinds of polyether radicals A of the formulae (VIIb) and (VIIc) are present in which the fraction of ethyleneoxy units, based on the total number of alkyleneoxy units, is not more than 30 mol%.

5. Defoamer formulations according to any of Claims 1 to 4, **characterized in that** the silicone polyethers (B) are used in the form of aqueous emulsions or microemulsions.

6. Defoamer formulations according to any of Claims 1 to 5, **characterized in that** they comprise

   (A) 1% to 90% by weight of siloxane-based antifoams,
   (B) 0.1% to 50% by weight of the silicone polyether according to any of Claims 1 to 4,
   (C) 0% to 20% by weight, preferably 2% to 20% by weight, of emulsifiers,
   (D) 0% to 97% by weight of water,
   based in each case on the total weight of the defoamer formulations,
   and optionally
   (E) preservatives, thickeners and further additions.

7. Defoamer formulations according to any of Claims 1 to 6, **characterized in that** they are O/W emulsions and comprise

   (A) 2% to 50% by weight of siloxane-based antifoams,
   (B) 0.1% to 40% by weight of the silicone polyether according to any of Claims 1 to 4,
   (C) 2% to 20% by weight of an emulsifier,
   (D) 50% to 95% by weight of water,
   based in each case on the total weight of the defoamer formulations,
   and optionally
   (E) preservatives, thickeners and further additions.

8. Defoamer formulations according to any of Claims 1 to 7, **characterized in that** the silicone polyethers (B) are emulsified together with the antifoam (A), or, after the preparation of an emulsion from the antifoam (A), the silicone polyethers (B) are added to the antifoam emulsion directly or in the form of an emulsion.

9. Use of defoamer formulations according to any of Claims 1 to 8 for defoaming aqueous media arising in pulp production.

10. Silicone polyethers (B) preparable by
    in a first step reacting
    organopolysiloxanes (1) containing from 0.05% to 1.6% by weight of Si-bonded hydrogen atoms with unsaturated polyethers (3) selected from the group of the general formulae:

$$CH_2=CR^1- (CH_2)_aO(C_2H_4O)_b(C_3H_6O)_cR^1 \qquad (Ib)$$

$$CH_2=CR^1- (CH_2)_aO(C_3H_6O)_cR^1 \qquad (Ic),$$

where
$R^1$ is a hydrogen atom or a hydrocarbon radical having 1 to 6 carbon atoms,
a is 0 or an integer from 1 to 16,
b is an integer from 1 to 50, and
c is an integer from 1 to 50,
with the proviso that the sum of b+c is at least 10 and that a mixture of two different kinds of polyethers of the formulae (Ib) and (Ic) is used, in which the fraction of ethyleneoxy units, based on the total number of alkyleneoxy units used, is not more than 30 mol%,
and optionally in a second step further reacting the reaction product from (1) and (3)
with organopolysiloxanes (2) containing from 0.01% to 0.5% by weight of Si-bonded hydrogen atoms,
with the proviso that the reactions in the first and second steps are carried out in the presence of catalysts (4) which promote the addition of Si-bonded hydrogen to aliphatic double bonds, and that the ratio of the weight concentration of Si-bonded hydrogen in organopolysiloxane (1) to the weight concentration of Si-bonded hydrogen in organopolysiloxane (2) is at least 1.5, preferably at least 2.0.

**Revendications**

1. Compositions d'antimousses contenant

   (A) un mélange d'acide silicique et de polyorganosiloxanes en tant qu'antimousse à base de siloxanes et
   (B) des silicone-polyéthers pouvant être préparés, dans une première étape,

   par mise en réaction d'organopolysiloxanes (1), qui ont une teneur en atomes d'hydrogène liés à Si de 0,05 à 1,6 % en poids,
   avec des polyéthers insaturés (3) choisis dans le groupe constitué par ceux de formules générales :

   $$CH_2=CR^1\text{-}(CH_2)_aO(C_2H_4O)_b(C_3H_6O)_cR^1 \qquad (Ib)$$

   $$CH_2=CR^1\text{-}(CH_2)_aO(C_3H_6O)_cR^1 \qquad (Ic),$$

   $R^1$ représentant un atome d'hydrogène ou un radical hydrocarboné ayant de 1 à 6 atomes de carbone,
   a étant 0 ou un nombre entier valant de 1 à 16,
   b étant un nombre entier valant de 1 à 50 et
   c étant un nombre entier valant de 1 à 50,
   étant entendu que la somme de b+c est égale à 10 au moins et qu'on utilise un mélange de deux différents types de polyéthers de formules (Ib) et (Ic) dans lesquels la proportion des motifs oxyde d'éthylène, par rapport au nombre total des motifs oxyde d'alkylène utilisés, est d'au maximum 30 % en moles,
   et éventuellement dans une deuxième étape,
   par mise de nouveau en réaction du produit de réaction de (1) et (3) avec des organopolysiloxanes (2), qui ont une teneur en atomes d'hydrogène liés à Si de 0,01 à 0,5 % en poids,
   étant entendu que les réactions dans les première et deuxième étapes sont effectuées en présence de catalyseurs (4) favorisant la fixation par addition d'hydrogène lié à Si sur des doubles liaisons aliphatiques et que le rapport de la concentration en poids d'hydrogène lié à Si dans l'organopolysiloxane (1) à la concentration en poids d'hydrogène lié à Si dans l'organopolysiloxane (2) est d'au moins 1,5, de préférence d'au moins 2,0.

2. Compositions d'antimousses selon la revendication 1, **caractérisées en ce qu'**on utilise en tant qu'organopolysiloxanes (1) ceux de formule générale

   $$H_hR_{3-h}SiO\ (SiR_2O)_o\ (SiRHO)_p SiR_{3-h}H_h \qquad (III)$$

   dans laquelle R peut être le même ou différent et représente un radical hydrocarboné monovalent ayant de 1 à 18 atomes de carbone, lié par une liaison SiC, exempt de liaisons multiples carbone-carbone aliphatiques, de préférence un radical méthyle,
   h vaut 0, 1 ou 2, de préférence 0 ou 1,
   o est 0 ou un nombre entier valant de 1 à 1 000, de préférence de 10 à 200, et
   p est 0 ou un nombre entier valant de 1 à 40, de préférence de 2 à 20,
   étant entendu qu'au moins 2 atomes d'hydrogène liés à Si sont contenus.

3. Compositions d'antimousses selon la revendication 1 ou 2, **caractérisées en ce qu'**on obtient en tant que silicone-polyéthers (B) des organopolysiloxanes qui contiennent des radicaux polyéther A choisis dans le groupe de ceux de formules générales

   $$\text{-}CH_2\text{-}CR^1\text{-}(CH_2)_aO(C_2H_4O)_b(C_3H_6O)_cR^1 \qquad (VIIb)$$

   $$\text{-}CH_2\text{-}CR^1\text{-}(CH_2)_aO(C_3H_6O)_cR^1 \qquad (VIIc),$$

   $R^1$, a, b et c ayant la signification indiquée pour eux dans la revendication 1,
   étant entendu que sont contenus deux différents types de radicaux polyéther A de formules (VIIb) et (VIIc) dans lesquels la proportion des motifs oxyde d'éthylène, par rapport au nombre total des motifs oxyde d'alkylène, est d'au maximum 30 % en moles.

17

**4.** Compositions d'antimousses selon l'une quelconque des revendications 1 à 3, **caractérisées en ce qu'**on obtient en tant que silicone-polyéthers (B) des organopolysiloxanes de formule générale

$$A_zR_{3-z}SiO (SiR_2O)_m(SiRAO)_mSiR_{3-z}A_z \qquad (VIII)$$

dans laquelle

A représente un radical polyéther choisi dans le groupe de ceux de formules générales

$$-CH_2-CR_1-(CH_2)_aO(C_2H_4O)_b(C_3H_6O)_cR^1 \qquad (VIIb)$$

$$-CH_2-CR^1-(CH_2)_aO(C_3H_6O)_cR^1 \qquad (VIIc),$$

R a la signification indiquée pour ce symbole dans la revendication 2,
$R^1$, a, b et c ont la signification indiquée pour eux dans la revendication 1,
z est 0, 1 ou 2, de préférence 0 ou 1,
m est 0 ou un nombre entier valant de 1 à 1 000, de préférence de 10 à 200, et
n est 0 ou un nombre entier valant de 1 à 50, de préférence de 2 à 20,
étant entendu que sont contenus deux différents types de radicaux polyéther A de formules (VIIb) et (VIIc) dans lesquels la proportion des motifs oxyde d'éthylène, par rapport au nombre total des motifs oxyde d'alkylène, est d'au maximum 30 % en moles.

**5.** Compositions d'antimousses selon l'une quelconque des revendications 1 à 4, **caractérisées en ce que** les silicone-polyéthers (B) sont utilisés sous forme d'émulsions ou de microémulsions aqueuses.

**6.** Compositions d'antimousses selon l'une quelconque des revendications 1 à 5, **caractérisées en ce qu'**elles contiennent

(A) 1 à 90 % en poids d'antimousse à base de siloxanes,
(B) 0,1 à 50 % en poids du silicone-polyéther selon l'une quelconque des revendications 1 à 4,
(C) 0 à 20 % en poids, de préférence 2 à 20 % en poids d'émulsifiants,
(D) 0 à 97 % en poids d'eau,
à chaque fois par rapport au poids total des compositions d'antimousses,
et éventuellement
(E) des conservateurs, épaississants et autres additifs.

**7.** Compositions d'antimousses selon l'une quelconque des revendications 1 à 6, **caractérisées en ce qu'**elles sont des émulsions H/E et contiennent

A) 2 à 50 % en poids d'antimousse à base de siloxanes,
(B) 0,1 à 40 % en poids du silicone-polyéther selon l'une quelconque des revendications 1 à 4,
(C) 2 à 20% en poids d'un émulsifiant,
(D) 50 à 95% en poids d'eau,
à chaque fois par rapport au poids total des compositions d'antimousses,
et éventuellement
(E) des conservateurs, épaississants et autres additifs.

**8.** Compositions d'antimousses selon l'une quelconque des revendications 1 à 7, **caractérisées en ce qu'**on émulsionne les silicone-polyéthers (B) conjointement avec l'antimousse (A) ou, après la préparation d'une émulsion de l'antimousse (A), on ajoute les silicone-polyéthers (B), directement ou sous forme d'une émulsion, à l'émulsion d'antimousse.

**9.** Utilisation des compositions d'antimousses selon l'une quelconque des revendications 1 à 8, pour l'élimination de la mousse de milieux aqueux apparaissant dans la production de la pâte de cellulose.

**10.** Silicone-polyéthers (B) pouvant être préparés, dans une première étape,
par mise en réaction d'organopolysiloxanes (1), qui ont une teneur en atomes d'hydrogène liés à Si de 0,05 à 1,6 % en poids,
avec des polyéthers insaturés (3) choisis dans le groupe constitué par ceux de formules générales :

$$CH_2=CR^1\text{-} (CH_2)_aO(C_2H_4O)_b(C_3H_6O)_cR^1 \qquad \text{(Ib)}$$

$$CH_2=CR^1\text{-} (CH_2)_aO(C_3H_6O)_cR^1 \qquad \text{(Ic)},$$

$R^1$ représentant un atome d'hydrogène ou un radical hydrocarboné ayant de 1 à 6 atomes de carbone,
a étant 0 ou un nombre entier valant de 1 à 16,
b étant un nombre entier valant de 1 à 50 et
c étant un nombre entier valant de 1 à 50,
étant entendu que la somme de b+c est égale à 10 au moins et qu'on utilise un mélange de deux différents types de polyéthers de formules (Ib) et (Ic) dans lesquels la proportion des motifs oxyde d'éthylène, par rapport au nombre total des motifs oxyde d'alkylène utilisés, est d'au maximum 30 % en moles,
et éventuellement dans une deuxième étape,
par mise de nouveau en réaction du produit de réaction de (1) et (3) avec des organopolysiloxanes (2), qui ont une teneur en atomes d'hydrogène liés à Si de 0,01 à 0,5 % en poids,
étant entendu que les réactions dans les première et deuxième étapes sont effectuées en présence de catalyseurs (4) favorisant la fixation par addition d'hydrogène lié à Si sur des doubles liaisons aliphatiques et que le rapport de la concentration en poids d'hydrogène lié à Si dans l'organopolysiloxane (1) à la concentration en poids d'hydrogène lié à Si dans l'organopolysiloxane (2) est d'au moins 1,5, de préférence d'au moins 2,0.

**IN DER BESCHREIBUNG AUFGEFÜHRTE DOKUMENTE**

**In der Beschreibung aufgeführte Patentdokumente**

- DD 056762 A
- DE 2925722 A
- EP 341952 A
- US 5523019 A
- WO 98000216 A
- EP 663225 A
- EP 1076073 A
- US 5625024 A
- DE 10255649 A
- DE 3133869 C1
- US 4417068 A
- US 5271868 A
- JP 58058126 A